Europäisches Patentamt

European Patent Office

Office européen des brevets

(11) Publication number: **0 590 648 A2**

# EUROPEAN PATENT APPLICATION

(21) Application number: **93115750.7**

(22) Date of filing: **29.09.93**

(51) Int. Cl.5: **H02M 7/219**

(30) Priority: **30.09.92 JP 261046/92**

(43) Date of publication of application:
**06.04.94 Bulletin 94/14**

(84) Designated Contracting States:
**CH DE GB LI**

(71) Applicant: **Kabushiki Kaisha Meidensha**
**2-1-17, Osaki,**
**Shinagawa-ku**
**Tokyo(JP)**

(72) Inventor: **Yasukawa, Kuniake**
**2-1-17, Osaki**
**Shinagawa-ku, Tokyo(JP)**
Inventor: **Ichioka, Tadashi**
**2-1-17, Osaki**
**Shinagawa-ku, Tokyo(JP)**
Inventor: **Ihara, Akio**
**2-1-17, Osaki**
**Shinagawa-ku, Tokyo(JP)**
Inventor: **Kouketsu, Masaju**
**2-1-17, Osaki**
**Shinagawa-ku, Tokyo(JP)**

(74) Representative: **Dipl.-Phys.Dr. Manitz**
**Dipl.-Ing., Dipl.-W.-Ing. Finsterwald Dipl.-Ing.**
**Grämkow Dipl.-Chem.Dr. Heyn Dipl.-Phys.**
**Rotermund**
**Morgan, B.Sc.(Phys.)**
**Postfach 22 16 11**
**D-80506 München (DE)**

(54) **Method of controlling power regenerative equipment.**

(57) A method of controlling a power regenerative equipment: providing in sequence "on" timing signals to self-arc-extinguishing semiconductor devices in response to phase voltages of an AC power source, and overlapping two of the "on" timing signals corresponding to two adjacent ones of the phase voltages with each other during a period of time from a point that a potential difference between the two adjacent ones of the phase voltages is smaller than a predetermined value to a point that the potential difference is null.

FIG.2

## BACKGROUND OF THE INVENTION

The present invention relates generally to a converter which enables regeneration of electric power and more particularly, to a method of controlling a power regenerative equipment.

Various regenerative converters using self-arc-extinguishing semiconductor devices have been proposed in past years. With such known regenerative converters, when regenerating electric power, a depression is unavoidably produced in an input line voltage waveform, which may form a noise source, and cause malfunction of the other equipments connected to the same system.

It is, therefore, an object of the present invention to provide a method of controlling a power regenerative equipment without any depression in a line voltage waveform.

## SUMMARY OF THE INVENTION

According to one aspect of the present invention, there is provided a method of controlling a power regenerative equipment, the power regenerative equipment having a power converter including a plurality of diodes connected to each other in a three-phase bridge manner and a plurality of self-arc-extinguishing semiconductor devices connected in parallel thereto, respectively, and having an input side connected to an AC power source for providing phase voltages, the method comprising the steps of:

providing in sequence "on" timing signals to the plurality of self-arc-extinguishing semiconductor devices in response to the phase voltages of the AC power source; and

overlapping two of said "on" timing signals corresponding to two adjacent ones of the phase voltages with each other during a period of time from a point that a potential difference between said two adjacent ones of the phase voltages is smaller than a predetermined value to a point that said potential difference is null.

According to another aspect of the present invention, there is provided a power regenerative equipment, comprising:

a power converter including a plurality of diodes connected to each other in a three-phase bridge manner and a plurality of self-arc-extinguishing semiconductor devices connected in parallel thereto, respectively, the power converter having an input side connected to an AC power source for providing phase voltages;

a controller connected to said power converter, said controller being so constructed as to:

provide in sequence "on" timing signals to said plurality of self-arc-extinguishing semiconductor devices in response to said phase voltages of said AC power source; and

overlap two of said "on" timing signals corresponding to two adjacent ones of said phase voltages with each other during a period of time from a point that a potential difference between said two adjacent ones of said phase voltages is smaller than a predetermined value to a point that said potential difference is null.

## BRIEF DESCRIPTION OF THE DRAWINGS

Fig. 1A is a voltage waveform chart of an AC power source of a power regenerative equipment to which the present invention is applied;

Fig. 1B is a time chart of gate signals out of the power regenerative equipment;

Fig. 2 is a diagrammatic view for explaining a power regenerative equipment control method according to the present invention;

Fig. 3 is a circuit diagram showing a known power regenerative equipment;

Fig. 4A is a view similar to Fig. 1A, but of a known AC power source;

Fig. 4B is a view similar to Fig. 1B, but of the known power regenerative equipment;

Fig. 5A is a view similar to Fig. 4A, but for explaining a known power regenerative equipment control method;

Fig. 5B is a view similar to Fig. 4B, but for explaining the known power regenerative equipment control method;

Fig. 5C is a view similar to Fig. 3, showing current passing through a power converter of the known power regenerative equipment; and

Fig. 6 is an enlarged voltage waveform chart of the known AC power source for explaining a problem of the known power regenerative equipment control method.

## DETAILED DESCRIPTION OF THE INVENTION

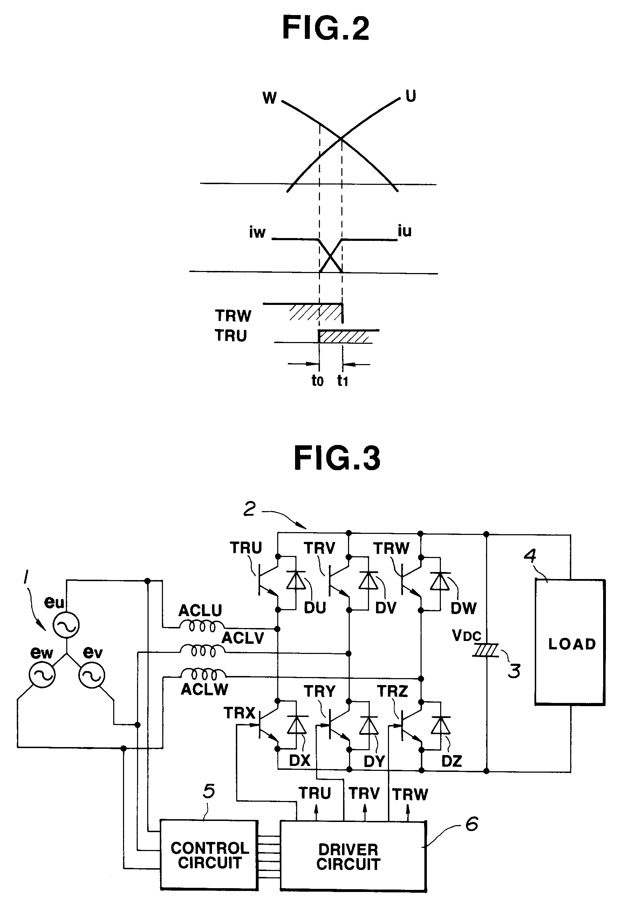

Referring to the drawings wherein like reference numerals designate like parts throughout the views, referring first to Figs. 3 to 6, before describing a preferred embodiment of the present invention, one of the previously proposed regenerative converters will be described.

Referring to Fig. 3, reference numeral 1 generally designates a three-phase AC power source which is connected to a power converter 2 through AC reactors ACLU-ACLW for input current limitation. The power converter 2 comprises diodes DU-DZ connected to each other in a three-phase bridge manner, and self-arc-extinguishing semiconductor devices such as transistors TRU-TRZ connected in parallel to the diodes DU-DZ, respectively. A smoothing capacitor 3 and a load 4 are connected in parallel to the power converter 2 on the DC side thereof. A control circuit 5 is arranged to detect a voltage phase of the AC power source 1, and generate signals on predetermined gate timings or "on" timings of the transistors TRU-TRZ. Additionally, a driver circuit 6 is arranged to amplify gate signals output from the control circuit 5, and fulfill switching control of the transistors TRU-TRZ.

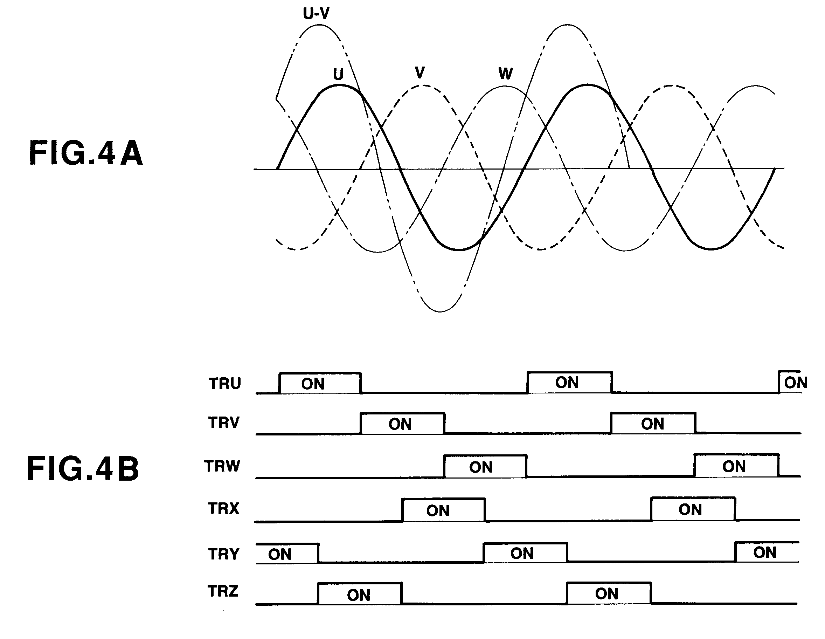

The transistors TRU-TRZ are subjected to "on" control in accordance with the voltage phase of the AC power source 1 at timings as shown in Figs. 4A and 4B. Fig. 4A shows a voltage waveform of the AC power source 1 in connection with U-, V-, W-, and U-V phases, whereas Fig. 4B shows a time chart of "on" gate signals output from the control circuit 5. Between U- and V-phases, for example, if an instantaneous value of input line voltage of the AC power source 1 is higher than DC side voltage of the power converter 2, i.e. , voltage $V_{DC}$ across the smoothing capacitor 3, current passes by the following route: AC power source 1 → AC reactor ACLU → diode DU → smoothing capacitor 3 → diode DY → AC reactor ACLV → AC power source, or AC power source 1 → Ac reactor ACLV → diode DV → smoothing capacitor 3 → diode DX → AC power source. Thus, power of the AC power source 1 is converted into DC power so as to provide on the side of a DC circuit.

On the other hand, if the instantaneous value of input line voltage of the AC power source 1 is lower than voltage $V_{DC}$ across the smoothing capacitor 3, current passes only during a "on" period of time as shown in Fig. 4B by the following route: AC power source 1 → AC reactor ACLU or ACLV or ACLW → transistor TRX or TRY or TRZ → smoothing capacitor 3 → transistor TRU or TRV or TRW → AC reactor ACLU or ACLV or ACLW → AC power source 1. Thus, power on the side of the DC circuit is converted into AC power to be regenerated in the AC power source 1. Between the other two phases, operation is carried out in the same manner.

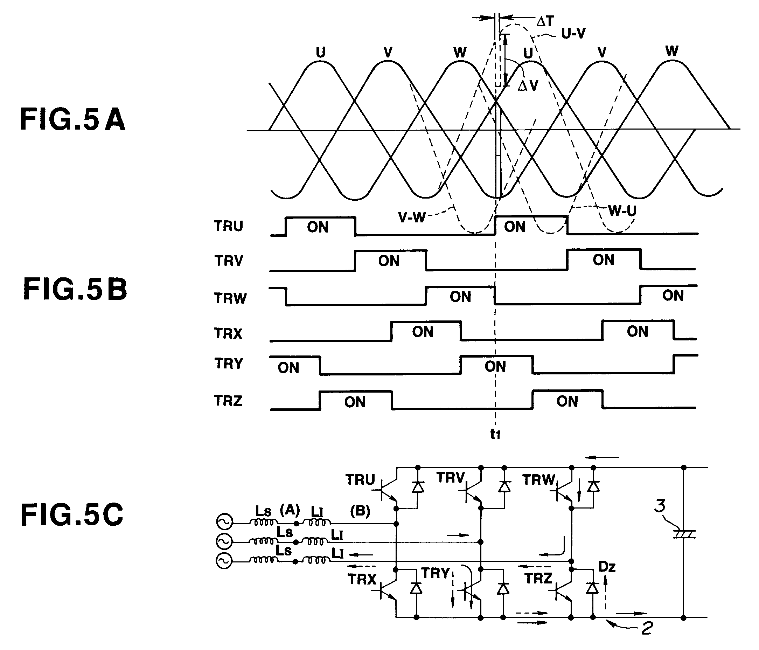

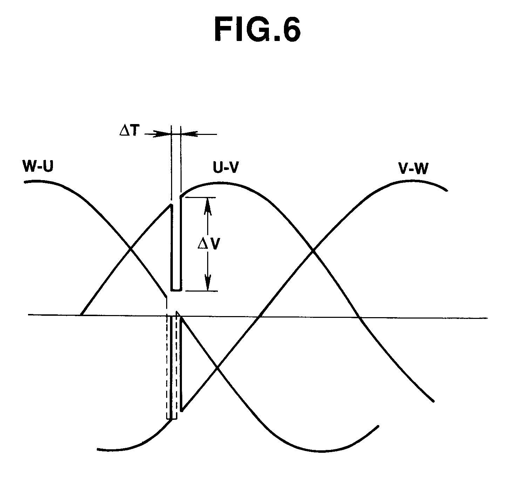

Referring to Figs. 5A to 5C, when regeneration of electric power is carried out by such known converter, a depression is produced in an input line voltage waveform. Specifically, Fig. 5C shows a state of current passing through the power converter 2 about a time $t_1$. Slightly before the time $t_1$, the transistors TRW, TRY are both on as shown in Fig. 5B, so that current passes as indicated by fully-drawn arrows in Fig. 5C. At the time $t_1$, the transistor TRW is off as shown in Fig. 5B, so that current is commutated from the transistor TRW to the diode DZ as indicated by a broken arrow in Fig. 5C. As a result, V- and W-phases are short-circuited, and phase voltages have waveforms as indicated by fully-drawn lines in Fig. 5A, respectively. Thus, a depression is produced in an U-V phase voltage waveform is produced as indicated by a broken line in Fig. 5A (see also Fig. 6). Between the other two phases, operation is carried out in the same manner.

Referring to Fig. 5C, reference numeral $L_S$ designates an equivalent of each AC reactor ACLU-ACLW, and $L_l$ designates an equivalent of a reactance of a line connecting each AC reactor ACLU-ACLW and the power converter 2. A width $\Delta T$ of the depression in the input line voltage waveform is determined by values of the AC side reactances $L_S$, $L_l$. Additionally, a height $\Delta V$ of the depression of the input line voltage waveform is approximately equal to $\{(U - V)/2\} \times \{L_S/(L_S + L_l)\}$ at a spot (A) as shown in Fig. 5C, i.e., ends of the AC reactors ACLU-ACLW on the side of the power converter 2, and (U - V)/2 at a spot (B) as shown in Fig. 5C, i.e., ends of the AC power converter 2 on the AC side thereof.

As described above, when carrying out power conversion at "on" timings of the transistors, since current passing through the transistors is cut out according to "off" control, the depression is produced in the line voltage waveform as shown in Figs. 5A and 6, which may form a noise source, and cause malfunction of the other equipments connected to the same system.

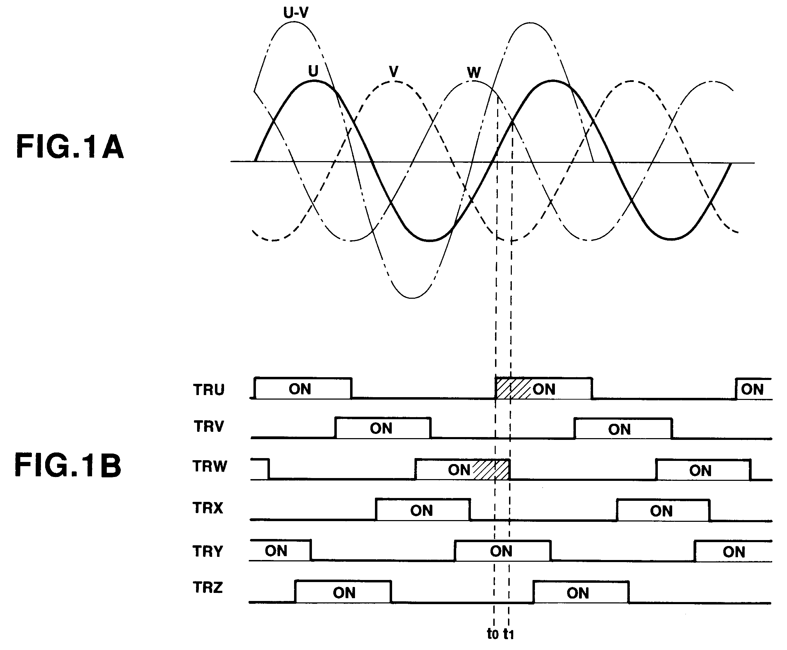

Referring next to Figs. 1A to 2, a preferred embodiment of the present invention will be described. In this embodiment, timings of the gate signals to be supplied to the self-arc-extinguishing semiconductor devices or transistors TRU-TRZ of the power converter 2 are modified, i.e., "on" timings of the gate signals on two phases having an inverse change in amplitude are overlapped with each other as shown in Figs. 1A and 1B. A voltage waveform in Fig. 1A and a time chart of the gate signals in Fig. 1B are obtained by applying the present invention to the equipment as shown in Fig. 3.

By way of example, referring to Figs. 1A and 1B, "on" timings of the transistors TRU, TRW are overlapped during a period from a time $t_0$ at which a difference in voltage between the W- and U-phases becomes small to a time $t_1$ at which the W- and U-phases have the same potential. Referring to Fig. 2, it will be understood that during the period $t_0$-$t_1$ with the "on" timings of the transistors TRU, TRW overlapped, line current is smoothly commutated in accordance with the relationship of amplitude of phase voltage (see currents iw, iu as shown in Fig. 2, which pass through the transistors TRW, TRU, respectively).

According to this embodiment, since the transistor TRW is off at a point at which commutation is completed, i.e., time $t_1$, the depression fails to be produced in the line voltage waveform as shown in Figs. 5A and 6.

Additionally, since the current iw passing through the transistor TRW is approximately zero at the time $t_1$, i.e., point at which the W- and U-phases have the same potential, short-circuit as described above in connection with Figs. 5A to 5C fails to occur between the W- and V-phases.

Moreover, during the period $t_0$-$t_1$ with the "on" timings of the transistors TRU, TRW overlapped as shown in Fig. 2, short-circuit occurs between the W-and U-phases, but no cross current is produced since the two phases have approximately the same potential.

Between the other two phases, i.e., U and V, V and W, X and Y, Y and Z, and Z and X, operation is carried in the same manner.

Having described the present invention in connection with the preferred embodiment, it is to be noted that the present invention is not limited thereto, but various changes and modifications are possible without departing from the spirit of the present invention. By way of example, the self-arc-extinguishing semiconductor device may be the other element in place of the transistor.

## Claims

1. A method of controlling a power regenerative equipment, the power regenerative equipment having a power converter including a plurality of diodes connected to each other in a three-phase bridge manner and a plurality of self-arc-extinguishing semiconductor devices connected in parallel thereto, respectively, and having an input side connected to an AC power source for providing phase voltages, the method comprising the steps of:
    providing in sequence "on" timing signals to the plurality of self-arc-extinguishing semiconductor devices in response to the phase voltages of the AC power source; and
    overlapping two of said "on" timing signals corresponding to two adjacent ones of the phase voltages with each other during a period of time from a point that a potential difference between said two adjacent ones of the phase voltages is smaller than a predetermined value to a point that said potential difference is null.

2. A power regenerative equipment, comprising:
    a power converter including a plurality of diodes connected to each other in a three-phase bridge manner and a plurality of self-arc-extinguishing semiconductor devices connected in parallel thereto, respectively, the power converter having an input side connected to an AC power source for providing phase voltages;
    a controller connected to said power converter, said controller being so constructed as to:
    provide in sequence "on" timing signals to said plurality of self-arc-extinguishing semiconductor devices in response to said phase voltages of said AC power source; and
    overlap two of said "on" timing signals corresponding to two adjacent ones of said phase voltages with each other during a period of time from a point that a potential difference between said two adjacent ones of said phase voltages is smaller than a predetermined value to a point that said potential difference is null.

FIG.1A

FIG.1B

# FIG.2

# FIG.3

EP 0 590 648 A2

**FIG.4A**

**FIG.4B**

EP 0 590 648 A2

**FIG.5 A**

**FIG.5 B**

**FIG.5 C**

# FIG.6